# FASCICULE DE BREVET EUROPEEN

(11) **EP 1 328 748 B1**
(45) Date de publication et mention de la délivrance du brevet: **25.02.2004**
(21) Numéro de dépôt: 01972174.5
(22) Date de dépôt: 20.09.2001
(51) Int. Cl.: F16L 9/18, F16L 57/00

(54) **CONDUITE A DOUBLE ENVELOPPE POUR LE TRANSPORT DES FLUIDES, MUNIE D'UN DISPOSITIF DE LIMITATION DE PROPAGATION D'UNE DEFORMATION DU TUBE EXTERNE, ET PROCEDE DE LIMITATION DE LA PROPAGATION**
DOPPELWANDIGE ROHRLEITUNGEN ZUM TRANSPORT VON FLÜSSIGKEITEN, MIT EINER VORRICHTUNG ZUR BEGRENZUNG DER AUSBREITUNG DER VERFORMUNG DES ÄUSSEREN ROHRES, UND VERFAHREN ZUR BEGRENZUNG DER AUSBREITUNG
DOUBLE-SHEATH PIPE FOR TRANSPORTING FLUIDS, PROVIDED WITH A DEVICE FOR LIMITING PROPAGATION OF AN OUTER TUBE AND METHOD FOR LIMITING PROPAGATION

(30) Priorité: 19.10.2000 FR 0013397
(43) Date de publication de la demande: 23.07.2003
(73) Titulaire: TECHNIP FRANCE, 92400 Courbevoie (FR)
(72) Inventeur: BASTARD, Antoine, F-27230 Thiberville (FR); BELL, Mike, Aberdeen (GB)
(74) Mandataire: Bertrand, Didier
(86) Numéro de dépôt international: PCT/FR2001/002929
(87) Numéro de publication internationale: WO 2002/033301

(56) Documents cités:
- US-A- 4 364 692
- US-A- 5 433 252

## Description

La présente invention concerne un dispositif et un procédé pour limiter ou arrêter la propagation d'une déformation dans une conduite à double enveloppe constituée de deux tubes coaxiaux respectivement interne et externe, séparés par un espace annulaire, cette conduite étant une conduite rigide de transport de fluides tels que des hydrocarbures, destinée à être immergée.

La pose d'un tube ou conduite rigide sur un fond marin est effectuée le plus souvent à partir d'un navire dit de pose. La pose est dite en S lorsque le tube affecte la forme d'un S entre le navire de pose et le fond marin et elle est dite en J lorsque le tube affecte la forme d'un J. Dans ce dernier cas, une rampe de guidage est prévue sur le navire de pose, laquelle rampe peut être parfois immergée partiellement dans l'eau.

Le tube rigide à poser est stocké sur le navire de pose soit en tronçons de tube de longueur donnée mais relativement courte, les tronçons de tube étant reliés ensemble au fur et à mesure de la pose, soit fabriqué en grande longueur à terre et enroulé sur une bobine de stockage située sur le bateau de pose, le tube étant alors déroulé de ladite bobine pendant l'opération de pose. Ces opérations de pose sont décrites dans le document API (American Petroleum Institute) Recommended Practice 17 A de 1987.

Lorsque le tube a quitté le navire et lors de la pose dudit tube, il est important que ce dernier ne subisse pas de déformation plastique en flexion qui entraînerait une ovalisation du tube, laquelle ovalisation provoquant un "point singulier faible" qui favoriserait l'initiation d'un écrasement ("collapse" en anglais). Par ailleurs, lorsque le tube est posé sur un fond marin à des profondeurs importantes d'eau (typiquement supérieures à 300 m et pouvant atteindre 2000 m et davantage), la pression hydrostatique s'exerçant sur le tube peut être suffisante pour initier une déformation radiale qui a tendance à se propager le long du tube, dans les deux directions. Bien entendu, la formation de la déformation se fera, en priorité sur un "point singulier faible" lorsqu'il existe sur le tube. Lorsque la déformation se produit, il est alors nécessaire de remplacer au moins la section ou partie du tube comportant la zone déformée ou écrasée. La pression de propagation de la déformation est donnée par la formule : A x σ₀ x (T/D)^{β} où σ₀ est la limite élastique de l'acier, T est l'épaisseur de la conduite et D est le diamètre externe de la conduite, et où les paramètres A et β sont donnés par les recommandations américaine API RP 1111 (A = 24, β=2,4) ou norvégienne DNV OS/F100 (A = 26,7, β=2,5). Pour résister à la propagation d'une déformation, il faut que la pression correspondante soit supérieure à la pression hydrostatique.

Pour éviter ce problème, on peut augmenter l'épaisseur de la conduite, de manière à avoir une pression de propagation supérieure à la pression hydrostatique, mais cela entraîne une augmentation considérable du coût et du poids de la conduite surtout pour les conduites rigides à double enveloppe.

Pour éviter la propagation de la ou des déformations locales, il a aussi été proposé de doter le tube de certains dispositifs ou organes, dénommés des limiteurs de déformation ("buckle arrestor" en anglais). L'API Recommended Practice 1111 donne diverses recommandations et formules qui indiquent à partir de quelle profondeur les limiteurs sont recommandés, nécessaires ou strictement indispensables. De tels dispositifs ont d'abord été proposés dans le cadre des conduites rigides à simple enveloppe.

Le limiteur peut être mobile, comme décrit dans le document US 3 747 356. Selon ce document, il est proposé de relier un cylindre à un câble, de loger le cylindre à l'interne d'une section de tube puis de dérouler en même temps le tube et le câble, de manière à maintenir le cylindre dans la section de tube pendant la pose de cette dernière jusqu'au contact du tube avec le fond marin. Puis on remonte le cylindre pour le loger dans une autre section de tube à poser et qui est reliée à la précédente. De ce fait, toute déformation susceptible de se produire, pendant la pose du tube, entre le navire de pose et le fond marin est immédiatement arrêtée et n'est donc pas autorisée à se propager le long des sections du tube. Toutefois, une telle proposition ne présente aucune solution ou efficacité pour arrêter les déformations susceptibles de se propager après la pose définitive du tube sur le fond marin.

C'est pourquoi on a proposé des limiteurs fixes, disposés de place en place sur la conduite. La distance séparant deux limiteurs est définie en fonction du coût de ces dispositifs par rapport au coût de remplacement du tronçon écrasé entre deux dispositifs. Généralement ces dispositifs sont disposés sur la conduite rigide tous les 100 à 300 m. Ces dispositifs, en augmentant localement l'inertie de la conduite, permettent d'arrêter la propagation d'une déformation.

Selon une première solution, on utilise une bague de renfort (éventuellement en deux parties, constituant un "clamp") interne ou de préférence externe. Ainsi, dans US 3 768 269, il est proposé d'augmenter localement la rigidité du tube en disposant à intervalles réguliers des bagues de renfort dont la longueur est comprise entre 1 m et 2,5 m. Une telle solution n'est valable que pour des tubes posés par sections car les bagues de renfort peuvent être montées et fixées en usine sur les sections de tube, puis transportées par le navire de pose jusqu'au lieu de pose. Lorsque le tube est de grande longueur et enroulé sur une bobine de stockage, il devient alors pratiquement impossible d'enrouler le tube avec ses bagues de renfort sur une bobine car elles induiraient des parties rectilignes ou sensiblement rectilignes et non déformables dans l'enroulement du tube sur la bobine de stockage. Pour pallier cette difficulté, il est possible d'envisager de monter et fixer les bagues de renfort pendant les opérations de pose. Mais alors cela nécessiterait d'interrompre la pose, à intervalles réguliers, afin de monter et fixer les bagues de renfort. Selon une solution alternative connue par ce même brevet ou par les documents GB 1383527 ou US 5458441, le renforcement localisé peut prendre la forme d'un manchon intermédiaire de plus forte épaisseur soudé aux extrémités de la conduite.

Selon une seconde solution, on utilise une tige spiralée sur la paroi externe du tube. Ainsi, pour permettre l'enroulement du tube sur une bobine, le document US 4 364 692 propose d'enrouler une tige autour du tube, de manière serrée, de façon à former un certain nombre de spires qui peuvent être soudées par leurs extrémités à la tige elle-même et/ou au tube.

Suivant une autre forme de réalisation, les spires peuvent être individuelles en soudant les deux extrémités et en les espaçant régulièrement sur la partie du tube à renforcer.

Tant que le tube est simple, l'accroissement du diamètre dans les parties renforcées peut être acceptable. Mais, lorsque le tube est du type à double enveloppe ("pipe in pipe" en anglais) c'est-à-dire comprenant un tube interne ("flowline" en anglais) qui est inséré dans le tube externe ("carrier pipe" en anglais), l'accroissement du diamètre du tube externe est inacceptable pour le transport et le stockage de grandes longueurs de tubes à double enveloppe lorsque le tube est posé par la méthode du rigide déroulé.

De plus, lorsque le tube rigide à poser est fabriqué en grande longueur à terre puis enroulé sur une bobine sur le navire de pose, les solutions préconisées dans les documents cités ci-dessus ne sont pas appropriées car elles utilisent soit des bagues de renfort de grande longueur, de l'ordre de 1 à 2,5 m, comme dans US 3 768 209, soit un enroulement d'une tige de renfort autour du tube rigide comme dans US 4 364 692.

Pour les conduites à enveloppe double, le dispositif d'arrêt est généralement un collier monté sur le tube externe de la conduite. Lorsque la conduite est posée avec un bateau de pose de rigide déroulé, ce dispositif doit être monté au fur et à mesure de la pose (il n'est pas enroulable), ce qui augmente considérablement le coût de la pose.

Dans le but de résoudre ces problèmes et d'obtenir des conduites à double enveloppe enroulables malgré les limiteurs de propagation, la Demanderesse a déjà proposé des dispositifs particuliers.

Selon la demande FR 99 08540, une portion de flexible ou de ressort est soudée sur la paroi interne du tube externe pour augmenter localement l'inertie du tube externe et constituer un limiteur de propagation. flexible enroulable.

Selon la demande FR 99 15216, le limiteur de propagation est constitué par un compartiment annulaire rempli de résine injectée avant ou pendant la pose et qui peut n'être durcie qu'après la pose si la longueur du compartiment de la résine est trop grande pour permettre l'enroulement à l'état durci. Le compartiment sert à transmettre les efforts du tube externe vers le tube interne.

Selon la demande FR 00 00849, le limiteur est constitué par une cloison d'acier transmettant, comme dans la solution précédente, les efforts du tube externe vers le tube interne.

Tous ces dispositifs d'arrêt de propagation de déformation consistent donc à renforcer le tube externe qui peut être soumis à cette propagation en augmentant directement ou indirectement l'inertie du tube externe.

Les dispositifs développés par la Demanderesse donnent de très bons résultats et sont efficaces jusqu'à des profondeurs de l'ordre de 2500 m. Dans certaines applications, lorsque la profondeur est plus faible, ces dispositifs peuvent représenter un coût excessif par rapport aux besoins réels.

Le but de l'invention est de proposer un dispositif limiteur de propagation pour conduite enroulable à double enveloppe qui soit très simple à fabriquer et à monter et efficace même dans des profondeurs d'eau importantes.

Le but de l'invention est atteint grâce à un procédé de limitation de la propagation d'une déformation apparaissant sur un tube externe d'une conduite ou tube rigide de transport d'hydrocarbures à double enveloppe constituée de deux tubes coaxiaux respectivement interne et externe séparés par un espace annulaire, cette conduite étant du type enroulable, caractérisé en ce qu'on détermine la déformation maximale que peut avoir le tube externe sans que ladite déformation se propage sous l'effet de la pression hydrostatique et on insère dans l'espace annulaire entre les deux tubes un dispositif lié au tube interne et non lié au tube externe de manière à limiter la déformation du tube externe en dessous de cette déformation maximale. Ainsi, l'invention prend le contre-pied des dispositifs connus ; au lieu de renforcer le tube externe de façon à l'empêcher de se déformer, on ne le renforce pas mais on donne une valeur maximale à la déformation qu'il peut prendre, valeur maximale déterminée par le calcul ou l'expérience, en fonction de la pression hydrostatique et des caractéristiques du tube externe.

L'invention concerne aussi la conduite mettant en oeuvre le procédé de l'invention à savoir une conduite rigide de transport d'hydrocarbures à double enveloppe constituée de deux tubes coaxiaux. respectivement interne et externe séparés par un espace annulaire, cette conduite étant du type enroulable et comprenant un dispositif limiteur de propagation d'une déformation apparaissant sur le tube externe, caractérisé en ce que ledit dispositif est constitué par un dispositif de butée radiale lié au tube interne permettant un enfoncement localisé de valeur G du tube externe, G étant détenniné pour arrêter la propagation d'une déformation du tube externe.

En pratique, G est déterminé en corrélation avec la longueur L du dispositif. En effet, le dispositif limiteur de propagation force la déformation du tube externe (son ovalisation) à se "reformer" sur un diamètre plus grand, et donc à passer d'une section elliptique relativement allongée, à une section elliptique moins allongée de même périmètre, cette section correspondant à une pression de propagation de la déformation supérieure à la pression hydrostatique. Cependant, pour arrêter la propagation de la déformation, il faut une longueur de dispositif suffisante pour dissiper l'énergie de propagation. Cette longueur doit notamment être suffisante pour que la "reformation" de l'ellipse aplatie sur le dispositif limiteur n'entraîne pas, par simple effet de géométrie, une nouvelle déformation en ellipse aplatie, de l'autre côté du dispositif, disposée en quadrature par rapport à la première ellipse, nouvelle déformation qui pourrait se propager à nouveau.

Bien que les valeurs à retenir pour G et L dépendent donc complètement de l'espèce, à savoir les caractéristiques géométriques et physiques de la conduite à double enveloppe et de la pression hydrostatique ambiante à laquelle elle est destinée, une règle empirique est de prévoir une longueur de dispositif comprise entre 0,3 et 5 fois, de préférence entre 0,5 et 3 fois, le diamètre externe du tube externe, et une épaisseur radiale de dispositif comprise entre 0,1 et 0,9 fois, de préférence entre 0,3 et 0,8 fois, l'épaisseur de l'espace annulaire. On comprend cependant que plus la longueur est grande, plus l'épaisseur peut être faible et vice versa.

L'invention s'applique notamment aux conduites doubles dotées d'espaceurs. Les espaceurs sont les anneaux entretoises qui centrent régulièrement le long de la conduite le tube interne revêtu de la couche d'isolation thermique de manière à empêcher un contact de ladite isolation thermique avec le tube externe. Ces espaceurs sont couramment disposés tous les 2,5 m. Leur hauteur est généralement de l'ordre de 70% à 80% de l'épaisseur de l'annulaire et leur longueur est inférieure à 100 mm pour limiter les pertes de chaleur. Ils sont généralement en matière plastique, par exemple en Nylon. Bien que l'épaisseur des espaceurs puisse dans certains cas être compatible avec une valeur correspondant à l'arrêt de la propagation, en pratique, ils ne sont pas utilisés à cet effet parce que, d'une part, leur longueur est trop courte pour dissiper l'énergie de propagation et que d'autre part, ils tendent à fluer dans le temps et sous la charge.

Dans un mode de réalisation, ledit dispositif est un tronçon, continu ou discontinu, du tube interne d'épaisseur augmentée.

Dans un autre mode de réalisation, ledit dispositif est un ressort solidarisé au tube interne.

Dans un autre mode de réalisation, ledit dispositif est constitué par une succession d'anneaux fixés au tube interne.

Dans un autre mode de réalisation, ledit dispositif est constitué par un manchon disposé au-dessus de l'isolation thermique entre deux espaceurs.

Dans un autre mode de réalisation, ledit dispositif est constitué par des bagues disposées sans serrage autour de la couche d'isolation thermique.

Dans un autre mode de réalisation, ledit dispositif est constitué par des plots retenus entre eux par des bandes souples.

Dans tous les modes de réalisation, le dispositif est réalisé dans un matériau résistant non susceptible de fluer, par exemple la résine époxy ou l'acier.

D'autres avantages et caractéristiques apparaîtront plus clairement à la lecture de la description suivante de l'invention, se référant aux dessins annexés sur lesquels :
- la figure 1 est une vue en coupe longitudinale d'une partie d'un tronçon rigide à double enveloppe équipé d'un premier mode de réalisation de dispositif limiteur de propagation conforme à l'invention ;
- la figure 2 est une vue en coupe longitudinale d'une partie d'un tronçon rigide à double enveloppe équipé d'un deuxième mode de réalisation de dispositif limiteur de propagation conforme à ('invention ;
- la figure 3 est une vue en coupe longitudinale d'une partie d'un tronçon rigide à double enveloppe équipé d'un troisième mode de réalisation de dispositif limiteur de propagation conforme à l'invention ;
- la figure 4 est une vue en coupe longitudinale d'une partie d'un tronçon rigide à double enveloppe équipé d'un quatrième mode de réalisation de dispositif limiteur de propagation conforme à l'invention ;
- la figure 5 est une vue en coupe longitudinale d'une partie d'un tronçon rigide à double enveloppe équipé d'un cinquième mode de réalisation de dispositif limiteur de propagation conforme à l'invention ;
- la figure 6 est une vue en coupe longitudinale d'une partie d'un tronçon rigide à double enveloppe équipé d'un sixième mode de réalisation de dispositif limiteur de propagation conforme à l'invention ;
- la figure 7 est une vue en coupe longitudinale d'une partie d'un tronçon rigide à double enveloppe équipé d'un septième mode de réalisation de dispositif limiteur de propagation conforme à l'invention ;
- la figure 8 est une vue en coupe transversale VIII-VIII du dispositif de la figure 7.

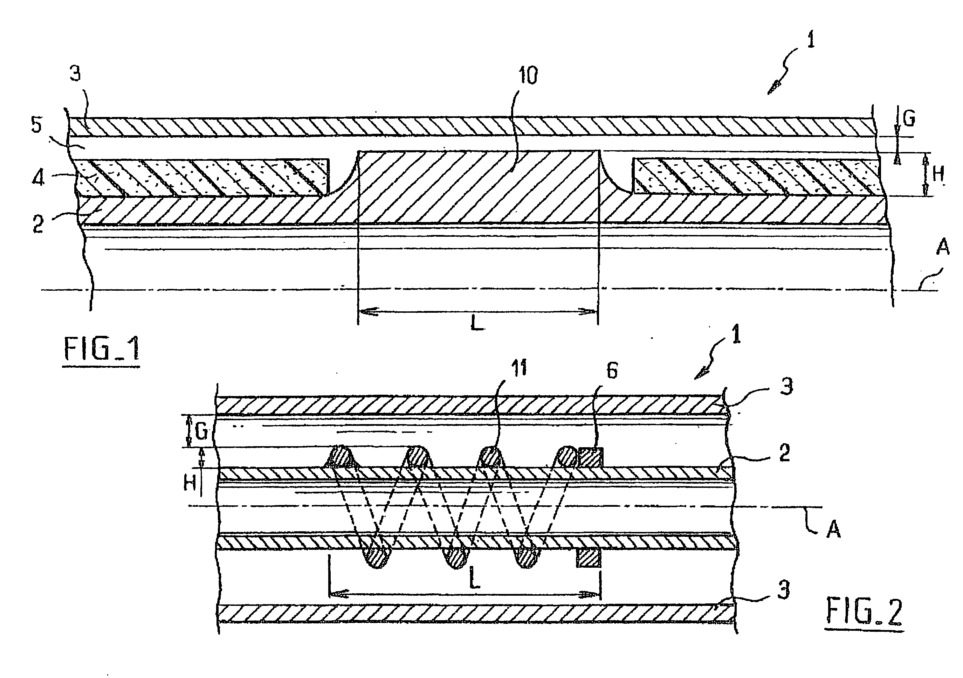

La conduite rigide à double enveloppe 1 d'axe longitudinal A, représenté partiellement sur la figure 1, comprend une enveloppe interne ("flowline" en anglais) ou tube interne 2 dont le diamètre et la nature du matériau sont choisis en fonction du fluide circulant dans ledit tube interne, notamment en fonction de la température et de la pression dudit fluide, et une enveloppe externe ou tube externe 3 ("carrier pipe" en anglais) qui est enfilé sur le tube interne 2. Le tube externe 3 présente un diamètre externe qui est surdimensionné par rapport au tube interne 2 pour permettre la mise en place d'un isolant thermique dans l'espace annulaire 5 et présente une épaisseur qui permet de résister normalement à la pression hydrostatique qui s'exerce sur ledit tube externe 3.

Selon l'invention, le tube interne 2 comprend un tronçon cylindrique 10 de longueur L d'épaisseur augmentée vers l'extérieur d'une valeur H, laissant une distance G avec le tube externe. G est, par calcul ou par expérience, supérieur à la valeur au-delà de laquelle une déformation du tube externe 3 se propage sous la pression hydrostatique, et la longueur L est suffisante pour arrêter la propagation d'une déformation.

On a réalisé des calculs sur une structure de conduite dont le tube interne mesure 10 pouces (273,1 mm) pour une épaisseur dé 12,7 mm et le tube interne mesure 6 pouces (168,3 mm) pour une épaisseur de 18,3 mm, avec un annulaire d'épaisseur 40 mm. La pression de propagation d'une déformation sans dispositif est de 11 MPa (110 bars, correspondant à environ 1100 m de profondeur d'eau). Lorsque le dispositif a une épaisseur de 20 mm (0,5 fois l'épaisseur de l'annulaire) la pression de propagation est de 16,5 MPa (165 bars, soit environ 1600m). Lorsque le dispositif a une épaisseur de 32 mm (0,8 fois l'épaisseur de l'annulaire) la pression de propagation est de 26 Mpa (260 bars, soit environ 2500m).

Un test a été réalisé avec une conduite double identique à celle des calculs, en formant un dispositif limiteur de propagation ayant une épaisseur de 32 mm et une longueur de 100 mm. Une déformation a été initiée sur le tube externe sous une pression externe de 150 bars (correspondant à la pression hydrostatique existant à 1500 m de profondeur): le dispositif a bien arrêté la déformation. On comprend que si le dispositif avait eu une épaisseur de 20 mm, la longueur de ce dispositif aurait dû être plus importante de manière à dissiper l'énergie de propagation (la pression de propagation dans ce cas étant supérieure mais proche de la pression extérieure). Par contre, si le dispositif avait une épaisseur faible (proche du diamètre externe du tube interne), il n'aurait pas arrêté la déformation, la pression de propagation étant dans ce cas inférieure à la pression extérieure.

On va maintenant décrire d'autres exemples de réalisation de dispositifs limiteurs.

La figure 2 montre un dispositif limiteur 11 constitué par un ressort enroulé à pas court autour du tube interne et soudé à lui ou bloqué en translation par une ou deux butées telles que l'anneau soudé 6. En utilisant un ressort de ce type on n'augmente pas la rigidité du tube interne.

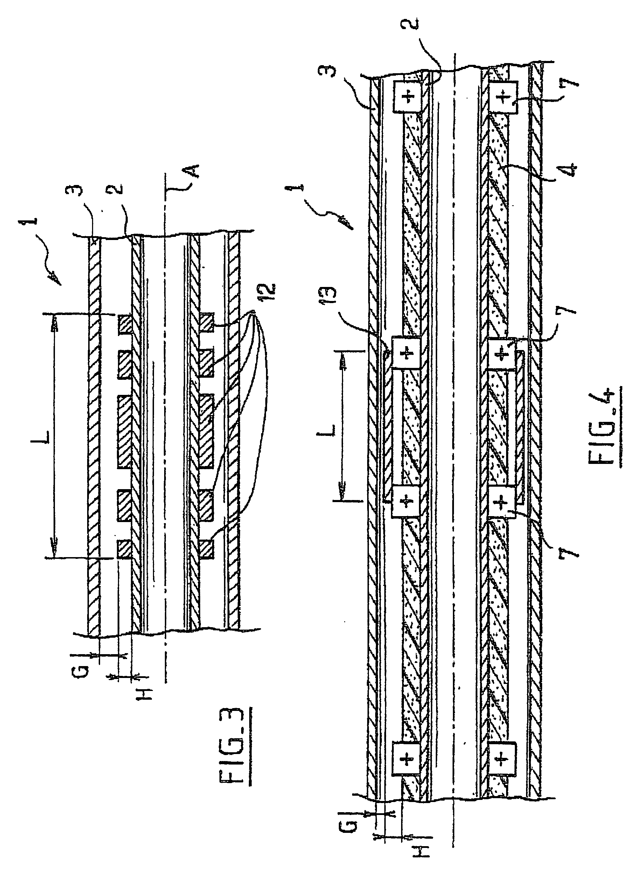

Dans la figure 3, le dispositif limiteur 12 est constitué par une succession d'anneaux en acier fixés sur le tube interne et de largeur décroissant du centre du dispositif vers ses extrémités, de manière à diminuer les contraintes sur le tube interne lors de l'enroulement. En alternative, les anneaux peuvent être en résine époxy de manière à limiter les pertes thermiques au niveau du dispositif. Les anneaux pourraient aussi être de même longueur.

Dans la figure 4, qui montre l'isolation 4 et les espaceurs 7, le dispositif limiteur est constitué par un manchon 13 disposé entre deux espaceurs 7 au-dessus de l'isolation thermique 4 et fixé aux espaceurs. Ce dispositif est particulièrement intéressant car il n'interfère pas avec l'isolation thermique. Le cas échéant on peut adapter l'espace séparant les espaceurs à la longueur L du dispositif d'arrêt.

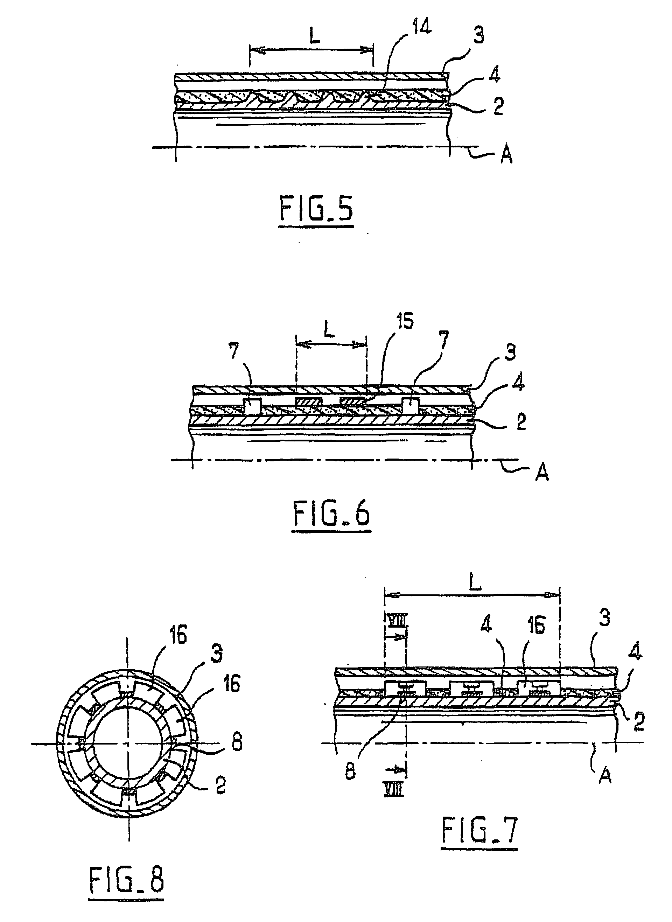

Dans la figure 5; le dispositif 14 est proche du dispositif de la figure 1, si ce n'est que la surépaisseur est discontinue (en section) au lieu d'être continue, et peut être réalisée sous forme d'une succession d'anneaux ou sous forme d'une hélice. Chaque anneau ou l'hélice peuvent eux-mêmes être formés d'une succession de surépaisseurs discrètes.

Dans la figure 6, le dispositif 15 est constitué par deux bagues d'acier disposées sans serrage autour de couche d'isolation thermique 4.

Dans les figures 7 et 8, le dispositif 16 est constitué de plusieurs cercles de plots reliés circonférentiellement par une bande flexible 8. L'isolation thermique 4 s'interpose entre ces cercles.

## Revendications

1. Conduite (1) rigide de transport d'hydrocarbures à double enveloppe destinée à être immergée et subir la pression hydrostatique, la conduite étant constituée de deux tubes coaxiaux respectivement interne (2) et externe (3) séparés par un espace annulaire (5), cette conduite (1) étant du type enroulable et comprenant un dispositif limiteur de propagation d'une déformation apparaissant sur le tube externe, **caractérisée en ce que** ledit dispositif est constitué par un dispositif (10-16) de butée radiale lié au tube interne (2) et non lié au tube externe (3) permettant un enfoncement localisé de valeur G du tube externe, G étant choisi pour arrêter la propagation d'une déformation du tube externe (3).

2. Conduite selon la revendication 1, **caractérisée en ce que** ledit dispositif (10-16) a une longueur comprise entre 0,3 et 5 fois, de préférence entre 0,5 et 3 fois, le diamètre du tube externe (3) et une épaisseur comprise entre 0,1 et 0,9 fois, de préférence entre 0,1 et 0,8 fois, l'épaisseur de l'espace annulaire (5).

3. Conduite selon l'une quelconque des revendications 1 ou 2, **caractérisée en ce que** ledit dispositif est un tronçon (10), continu ou discontinu, du tube interne d'épaisseur augmentée.

4. Conduite selon l'une quelconque des revendications 1 ou 2, **caractérisée en ce que** ledit dispositif est un ressort (11) solidarisé au tube interne.

5. Conduite selon l'une quelconque des revendications 1 ou 2, **caractérisée en ce que** ledit dispositif est constitué par une succession d'anneaux (12) fixés au tube interne.

6. Conduite selon l'une quelconque des revendications 1 ou 2, du type comportant des espaceurs (7) entre lesquels est disposée une isolation thermique (4), **caractérisée en ce que** ledit dispositif est constitué par un manchon (13) disposé au-dessus de l'isolation thermique (4) entre deux espaceurs (7).

7. Conduite selon l'une quelconque des revendications 1 ou 2, du type comportant une couche d'isolation thermique (4), **caractérisée en ce que** ledit dispositif est constitué par des bagues (15) disposées sans serrage autour de la couche d'isolation thermique (4).

8. Conduite selon l'une quelconque des revendications 1 ou 2, **caractérisée en ce que** ledit dispositif est constitué par des plots (16) retenus entre eux par des bandes souples (8).

9. Conduite selon l'une quelconque des revendications précédentes, **caractérisée en ce que** le dispositif (10-16) est réalisé dans un matériau résistant non susceptible de fluer, par exemple la résine époxy ou l'acier, avantageusement en acier.

10. Procédé de limitation de la propagation d'une déformation apparaissant sur un tube externe (3) d'une conduite (1 ) ou tube rigide de transport d'hydrocarbures à double enveloppe destinée à être immergée et subir la pression hydrostatique, la conduite étant constituée de deux tubes coaxiaux respectivement interne (2) et externe (3) séparés par un espace annulaire (5), cette conduite (1) étant du type enroulable, **caractérisé en ce qu'**on détermine la déformation maximale que peut avoir le tube externe sans que ladite déformation se propage sous l'effet de la pression hydrostatique et on insère dans l'espace annulaire entre les deux tubes un dispositif lié au tube interne et non lié au tube externe de manière à limiter la déformation du tube externe.

## Patentansprüche

1. Starre Leitung (1) für den Transport von Kohlenwasserstoffen, die eine doppelte Hülle besitzt und dazu bestimmt ist, untergetaucht und dem hydrostatischen Druck ausgesetzt zu werden, wobei die Leitung aus zwei koaxialen Rohren, d. h. einem inneren Rohr (2) und einem äußeren Rohr (3), die durch einen ringförmigen Raum (5) getrennt sind, gebildet ist, vom wickelbaren Typ ist und eine Vorrichtung zur Begrenzung der Ausbreitung einer an dem äußeren Rohr auftretenden Verformung aufweist, **dadurch gekennzeichnet, dass** die Vorrichtung durch eine Radialanschlagvorrichtung (10-12) gebildet ist, die mit dem inneren Rohr (2) verbunden und mit dem äußeren Rohr (3) nicht verbunden ist und ein lokalisiertes Einsinken um einen Wert G des äußeren Rohrs ermöglicht, wobei G so gewählt ist, dass die Ausbreitung einer Verformung des äußeren Rohrs (3) angehalten wird.

2. Leitung nach Anspruch 1, **dadurch gekennzeichnet, dass** die Vorrichtung (10-16) eine Länge im Bereich vom 0,3- bis Sfachen, vorzugsweise vom 0,5- bis 3fachen Durchmesser des äußeren Rohrs (3) und eine Dicke im Bereich von der 0,1- bis 0,9fachen, vorzugsweise von der 0,1- bis 0,8fachen Dicke des ringförmigen Raums (5) hat.

3. Leitung nach einem der Ansprüche 1 oder 2, **dadurch gekennzeichnet, dass** die Vorrichtung ein ununterbrochenes oder unterbrochenes Teilstück (10) des inneren Rohrs mit erhöhter Dicke ist.

4. Leitung nach einem der Ansprüche 1 oder 2, **dadurch gekennzeichnet, dass** die Vorrichtung eine an dem inneren Rohr befestigte Feder (10) ist.

5. Leitung nach einem der Ansprüche 1 oder 2, **dadurch gekennzeichnet, dass** die Vorrichtung durch eine Folge von am inneren Rohr befestigten Ringen (12) gebildet ist.

6. Leitung nach einem der Ansprüche 1 oder 2 des Typs, der Abstandshalter (7) aufweist, zwischen denen eine Wärmeisolierung (4) angeordnet ist, **dadurch gekennzeichnet, dass** die Vorrichtung durch eine Muffe (13) gebildet ist, die über der Wärmeisolierung (4) zwischen zwei Abstandshaltern (7) angeordnet ist.

7. Leitung nach einem der Ansprüche 1 oder 2 des Typs, der eine wärmeisolierende Schicht (4) aufweist, **dadurch gekennzeichnet, dass** die Vorrichtung durch Reife (15) gebildet ist, die ohne Klemmung um die wärmeisolierende Schicht (4) angeordnet sind.

8. Leitung nach einem der Ansprüche 1 oder 2, **dadurch gekennzeichnet, dass** die Vorrichtung durch Höcker (16) gebildet ist, die durch elastische Bänder (8) zusammengehalten werden.

9. Leitung nach einem der vorhergehenden Ansprüche, **dadurch gekennzeichnet, dass** die Vorrichtung (10-16) aus einem nicht fließfähigen, beständigen Werkstoff verwirklicht ist, beispielsweise aus Epoxidharz oder Stahl, vorteilhaft aus Stahl.

10. Verfahren zum Begrenzen der Ausbreitung einer Verformung, die an einem äußeren Rohr (3) einer starren Leitung (1) oder eines starren Rohrs mit doppelter Hülle für den Transport von Kohlenwasserstoffen auftritt, wobei die Leitung bzw. das Rohr dazu bestimmt ist, untergetaucht und dem hydrostatischen Druck ausgesetzt zu werden, wobei die Leitung aus zwei koaxialen Rohren, d. h. einem inneren Rohr (2) und einem äußeren Rohr (3), die durch einen ringförmigen Zwischenraum (5) getrennt sind, gebildet ist und vom wickelbaren Typ ist, **dadurch gekennzeichnet, dass** die maximale Verformung, die das äußere Rohr haben kann, ohne dass sich die Verformung unter der Wirkung des hydrostatischen Drucks ausbreitet, bestimmt wird und dass in den ringförmigen Raum zwischen den zwei Rohren eine Vorrichtung eingefügt wird, die mit dem inneren Rohr verbunden und mit dem äußeren Rohr nicht verbunden ist, so dass die Verformung des äußeren Rohrs begrenzt wird.

## Claims

1. Double-walled rigid pipe (1) for transporting hydrocarbons and intended to be immersed and subjected to hydrostatic pressure, the pipe consisting of two coaxial tubes, the inner tube (2) and the outer tube (3) respectively, separated by an annular space (5), this pipe (1) being of the reelable type and including a device for limiting the propagation of a buckle appearing on the outer tube, **characterized in that** the said device consists of a radial stop device (10-16) linked to the inner tube (2) and not linked to the outer tube (3), allowing a localized collapse of value G of the outer tube, G being chosen to arrest the propagation of a buckle of the outer tube (3).

2. Pipe according to Claim 1, **characterized in that** the said device (10-16) has a length of between 0.3 and 5 times, preferably between 0.5 and 3 times, the diameter of the outer tube (3) and a thickness of between 0.1 and 0.9 times, preferably between 0.1 and 0.8 times, the thickness of the annular space (5).

3. Pipe according to either of Claims 1 and 2, **characterized in that** the said device is a continuous or discontinuous section (10) of the inner tube with an increased thickness.

4. Pipe according to either of Claims 1 and 2, **characterized in that** the said device is a spring (11) fastened to the inner tube.

5. Pipe according to either of Claims 1 and 2, **characterized in that** the said device consists of a succession of rings (12) fixed to the inner tube.

6. Pipe according to either of Claims 1 and 2, of the type comprising spacers (7) between which a thermal insulation (4) is placed, **characterized in that** the said device consists of a sleeve (13) placed over the thermal insulation (4) between two spacers (7).

7. Pipe according to either of Claims 1 and 2, of the type comprising a layer of thermal insulation (4), **characterized in that** the said device consists of collars (15) placed loosely around the layer of thermal insulation (4).

8. Pipe according to either of Claims 1 and 2, **characterized in that** the said device consists of studs (16) held together by flexible bands (8).

9. Pipe according to any one of the preceding claims, **characterized in that** the device (10-16) is made of a strong material not liable to creep, for example epoxy resin or steel, advantageously steel.

10. Method of limiting the propagation of a buckle appearing on an outer tube (3) of a double-walled rigid pipe (1) or tube for transporting hydrocarbons and intended to be immersed and subjected to hydrostatic pressure, the pipe consisting of two coaxial tubes, the inner tube (2) and the outer tube (3) respectively, separated by an annular space (5), this pipe (1) being of the reelable type, **characterized in that** the maximum deformation that the outer tube may have without the said buckle propagating due to the effect of the hydrostatic pressure is determined and a device linked to the inner tube and not linked to the outer tube is inserted into the annular space between the two tubes so as to limit the deformation of the outer tube.
